# EUROPEAN PATENT SPECIFICATION

(11) **EP 2 780 221 B1**
(45) Date of publication and mention of the grant of the patent: **27.04.2016**
(21) Application number: 12806155.3
(22) Date of filing: 13.11.2012
(51) Int. Cl.: B62M 1/12

(54) **SYSTEM FOR ACTUATING HUMAN-POWERED VEHICLES AND HUMAN-POWERED VEHICLE COMPRISING SAID SYSTEM**
SYSTEM ZUR BETÄTIGUNG VON DURCH MENSCHENKRAFT ANGETRIEBENE FAHRZEUGE UND MENSCHENBETRIEBENES FAHRZEUG MIT DIESER VORRICHTUNG
SYSTÈME PERMETTANT D'ACTIONNER DES VÉHICULES À PROPULSION HUMAINE ET VÉHICULE À PROPULSION HUMAINE COMPORTANT LEDIT SYSTÈME

(30) Priority: 14.11.2011 ES 201131822
(43) Date of publication of application: 24.09.2014
(73) Proprietor: Martí Ballesté, Helíades, 08390 Montgat (ES)
(72) Inventor: Martí Ballesté, Helíades, 08390 Montgat (ES)
(74) Representative: Oficina Ponti, SLP
(86) International application number: PCT/IB2012/056391
(87) International publication number: WO 2013/072850

(56) References cited:
- EP-A2- 0 069 932
- WO-A1-2007/016736
- DE-A1- 4 415 611
- DE-A1-102005 008 890
- US-A- 4 928 986
- US-A- 4 941 673
- US-A- 4 976 451
- US-A- 6 155 584

## Description

The present invention relates to a system for actuating human-powered vehicles, claimed in claim 1 and a vehicle that includes said system, claimed in claim 10, such as for example a bicycle or tricycle having improved drive means, in such a manner that the user uses his / her arms and legs to actuate said vehicle.

### BACKGROUND OF THE INVENTION

Conventional bicycles comprise pedals which are actuated by the user, causing one of the bicycle wheels to rotate. The drawback of these bicycles is that the power which can be transmitted is limited, as said power can only be transmitted through the user's legs, achieving equally limited travel speeds.

In order to resolve these drawbacks and transmit greater power to one of the wheels, bicycles comprising actuation systems equipped with two actuation means have been devised: upper actuation means that are actuated by the user's arms and lower actuation means that are actuated by the user's legs.

For example, patent application EP 0 069 932 A2, which is considered the nearest reference, discloses a bicycle having actuation means for legs and actuation means for arms, which slide longitudinally in an alternating movement.

The drawback of this bicycle and, in general, of the dual-action bicycles known in the current state of the art, is that the transmission mechanism between said actuation means and the driven wheel of the bicycle is complex and excessively expensive.

Therefore, the need for an actuation system for vehicles such as bicycles, which can be actuated using arms and legs and, at the same time, have a simpler drive mechanism than that of the bicycles known in the current state of the art, is evident.

DE-A-10 2005 008 890 discloses a system having the features of the preamble of claim 1.

### DESCRIPTION OF THE INVENTION

The present invention provides an actuation system for human-powered vehicles and a vehicle which includes said system that resolves the aforementioned drawbacks, also having other advantages described below.

According to a first aspect, the present invention provides an actuation system comprising upper and lower actuation means that actuate the rotation of at least one of the wheels of said vehicle, wherein said upper actuation means are actuated by the user's arms and said lower actuation means are actuated by the user's legs, said upper and lower actuation means being linked therebetween and actuated by an alternative longitudinal movement, characterised in that said upper and lower actuation means are linked therebetween by a first endless chain through a first longitudinally movable drive element and a second longitudinally movable drive element, one of said drive elements being susceptible of actuating said first chain in one direction, while the other drive element moves simultaneously with the same chain in the opposite direction and in that the first chain is integrally attached, by means of said second drive element, to a second transmission chain linked to one of the wheels of said vehicle.

In the system of the present invention, the force exerted by the user is susceptible to being transmitted through a single chain that simultaneously links the movement of the user's arms and legs by means of the drive elements of said chain, in such a manner that when one of the drive elements moves actuated by the arms in one direction, the other drive element associated with the feet moves in the opposite direction.

As a result, it has been observed that the transmission of power can be carried out in a very fast and efficient manner, achieving considerably higher speeds than those of conventional bicycles. Additionally, this is achieved using a simpler and less expensive actuation mechanism. According to a preferred embodiment, said system comprises means for transmitting the movement of said first chain to the wheel of said vehicle in a single direction of rotation or travel of said vehicle, in such a manner that the movement of said first chain in the direction of rotation opposite to the direction of travel is carried out without exerting traction force on said wheel.

It has been observed that these transmission means allow the speed of the movements made by the user's legs and arms to actuate the chain to be unequally uniform. Specifically, it has been observed that the movement made without exerting traction force (backstroke) can be made at a very high speed, said backstroke movement being made in a very short period of time, whereupon the lag in delivery of power is practically reduced to an instant. As a result, a power output surprisingly higher than that of the systems of the state of the art is achieved. Therefore, for example, it has been verified that with the system of the present invention it is possible to move a vehicle, such as a conventional bicycle or tricycle, at 50 m/s, executing alternative stroke lengths of 72 cm with the arms and legs every second.

Said first chain is integrally attached to a second transmission chain linked to one of the wheels of said vehicle. Therefore, on actuating said first chain, a second chain linked with the wheels of the vehicle is automatically actuated.

Said first chain is integrally attached to said second transmission chain by means of said second drive element. In this manner, the traction force of the drive element of the first chain is transmitted in a highly efficient manner to the second chain.

Advantageously, said first and second drive elements are integrally attached to said first chain and, preferably, one of said drive elements is linked to the arms of a user by means of a steering wheel of said vehicle and the other drive element is linked to the feet of said user by means of supports acting by way of pedals of said vehicle.

In particular, preferably, if said vehicle is a bicycle or tricycle, said steering wheel includes a pair of cables to move the front wheels of said bicycle or tricycle.

According to a preferred embodiment, said preferred drive element is rotatably in relation to a substantially horizontal axis and is attached to a double front wheel of the bicycle by means of a pair of cables, in such a manner that said cables transmit the rotation of the first drive element to the double front wheel.

According to the same preferred embodiment, said second transmission chain comprises a first end attached to a first plate and a second end attached to a second plate, said second chain being susceptible of alternatively actuating each of said plates.

Preferably, if said vehicle is a bicycle or tricycle, the system includes a third plate that is actuated by the movement of said second chain, said third plate being linked to a third transmission chain which is associated with a sprocket or gearwheel which rotates integrally with the plate that actuates the wheel of said bicycle or tricycle, said sprocket or gearwheel being susceptible of transmitting the movement of said third chain to the wheel of the bicycle or tricycle in a single direction of rotation or travel.

Preferably, the diameter of said two plates is determined in accordance with the maximum stroke length of said two drive elements, said distance being susceptible of being modified by the user to vary the speed of the vehicle.

This aspect is particularly interesting for accelerating the vehicle or ascending ramps, as the user can substantially reduce the stroke length executed with the drive elements (arms and legs) to avoid getting tired. Additionally, it also facilitates actuation of the vehicle in the case of people with reduced mobility or elderly people.

Advantageously, said first and second drive elements slide along corresponding rails.

In accordance with a second aspect, the present invention provides a human-powered vehicle, such as for example a bicycle or tricycle, characterised in that it includes the claimed system.

Preferably, said vehicle comprises a seat that is mounted in a longitudinally movable manner in relation to the chassis of said vehicle, said seat facilitating the actuation of said drive elements through the user's arms and legs. In this manner, the distance required between the user's arms and legs to execute the same stroke length using the drive elements is compensated. Advantageously, the chassis of said vehicle comprises a support structure that cooperates with said movable seat in order to facilitate the actuation of said drive elements.

Therefore, the user can move forward by leveraging the reaction force of said support structure. In the present invention, plate shall be understood to be a gearwheel associated with a transmission chain.

Transmission chain shall be understood to be, preferably, a chain of the type used on conventional or standard bicycles or tricycles.

### BRIEF DESCRIPTION OF THE DRAWINGS

In order to better understand the foregoing, drawings are attached which, schematically and solely by way of non-limiting example, represent several practical embodiments.

In said drawings:
Figure 1 shows a schematic elevational side view of a bicycle that includes the actuation system of the present invention;
Figure 2 shows a schematic elevational side view of an embodiment of the actuation system of the present invention; and
Figure 3 shows a schematic overhead view of a bicycle that includes the actuation system of the present invention.
Figure 4 shows a perspective view that illustrates an embodiment of the actuation system of the present invention.
Figure 5 shows a side view of the system of figure 4.
Figure 6 shows an overhead view of the system of figure 4.
Figure 7 shows a perspective view illustrating another human-powered vehicle that includes the actuation system of the present invention.
Figure 8 shows a perspective view illustrating a detail of the vehicle of figure 7.
Figures 9 and 10 show schematic views of a user in different positions seated on a vehicle that includes the actuation system of the present invention.

### DESCRIPTION OF PREFERRED EMBODIMENTS

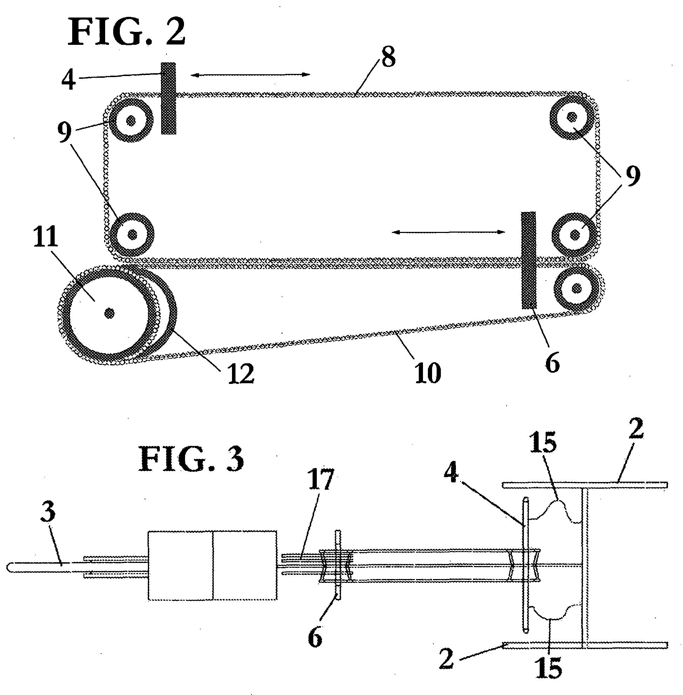

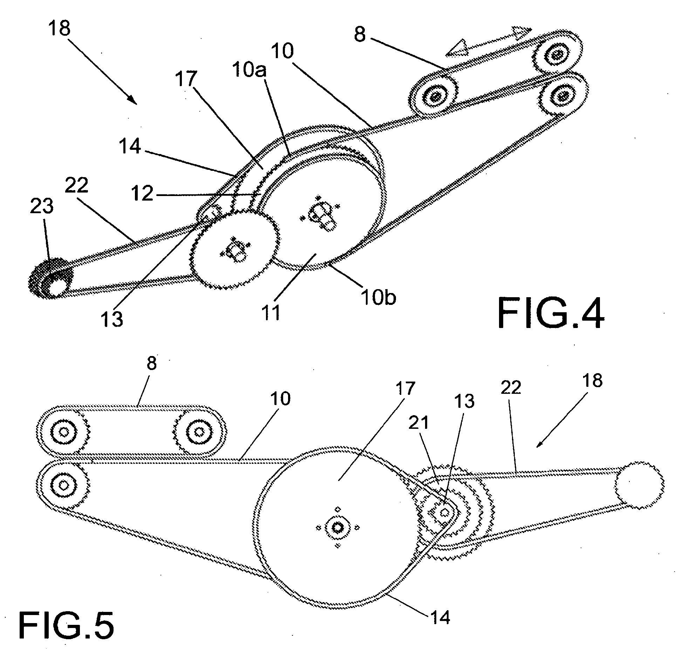

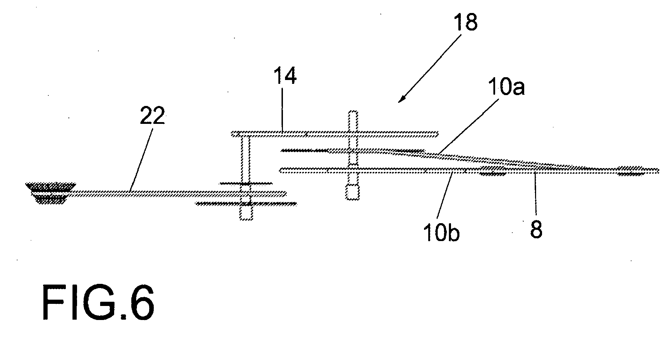

As shown schematically in figure 2 and in a more detailed manner in figures 4 to 6, the actuation system 18 of the present invention includes a first endless chain 8 that joins a first drive element 4 and a second drive element 6 which are actuated respectively by the arms 19 and legs 20 of a user of a human-powered vehicle.

As mentioned in the description of the invention, in the system 18 being claimed, when the drive element 4 linked to the user's arms 19 is actuated in one direction, the other drive element 6 linked to the user's legs 20 moves simultaneously in the opposite direction, due to which the transmission of force can be carried out in a fast and efficient manner.

In the embodiment described, the first endless chain 8 is integrally attached to a second endless chain 10 by means of the drive element 6 linked to the user's legs 18. Therefore, when the user actuates the first chain 8, the second chain 10 moves, enabling the transmission of said movement to a wheel 3 of the vehicle.

As can be observed in detail in figures 4 to 6, the second chain 10 comprises a first end 10a that is attached to a first plate 12 and a second end 10b that is attached to a second plate 11. In this manner, the second chain 10 can actuate each of said plates 11, 12 alternatively, in such a manner that the chain 12 released by one plate 11 is engaged by the other plate 12 and vice versa.

In the embodiment shown in figures 4 to 6, the movement of the second chain 10 is transmitted to a third plate 17 that rotates integrally with the other two plates 11, 12. This third plate 17 is linked to a third chain 14 which is in turn associated with a sprocket 13 that rotates integrally with a plate 21 that actuates the wheel 3 of the vehicle. This plate 21 can be, for example, a conventional plate of a bicycle that actuates the rear wheel 3 through a fourth chain 22 associated with another sprocket 23 that rotates integrally with the axis of the wheel 3.

As regards the sprocket 13, this sprocket 13 is unidirectional to transmit the motion allowing the backstroke movement to be effortless and almost instantaneous. In fact, the sprocket 13 has the peculiarity that it only transmits the movement of the third chain 14 in a direction of rotation or forward movement, allowing movement in the opposite direction of said chain 14 (backstroke) without traction force in a nearly instantaneous manner. As a result, the lag in the delivery of power to the wheel is minimised, which has a positive effect on system 18 performances.

As mentioned in the description of the invention, the diameter of the plates 11, 12 is determined in accordance with the maximum stroke length that can be executed by the arms 19 and legs 20 through the respective drive elements 4, 6. Nevertheless, it has been observed that for an average stroke length of arms 19 and legs 20 of approximately 72 cm, the plates 11, 12, 17 can have a diameter equivalent to 70 or 85 teeth, while the sprocket 13 that rotates integrally with the plate 21 that actuates the wheel 3 can have a diameter equivalent, for example, to 14 or 12 teeth. These diameters enable speeds of over 50 m/s to be achieved and a rowing speed of 0.7 m/s in the rear wheel 3 of a conventional bicycle, which is the speed achieved on executing an average stroke length of 72 cm/s with the arms 19 and legs 20 (forward direction of travel which exerts traction force on the wheel 3). Also, as mentioned in the description of the invention, the user can modify the stroke length of the arms 19 and legs 20 to vary the speed of the vehicle, thereby adapting it to his / her needs, in order to accelerate or facilitate movement in the case of elderly people or people with reduced mobility.

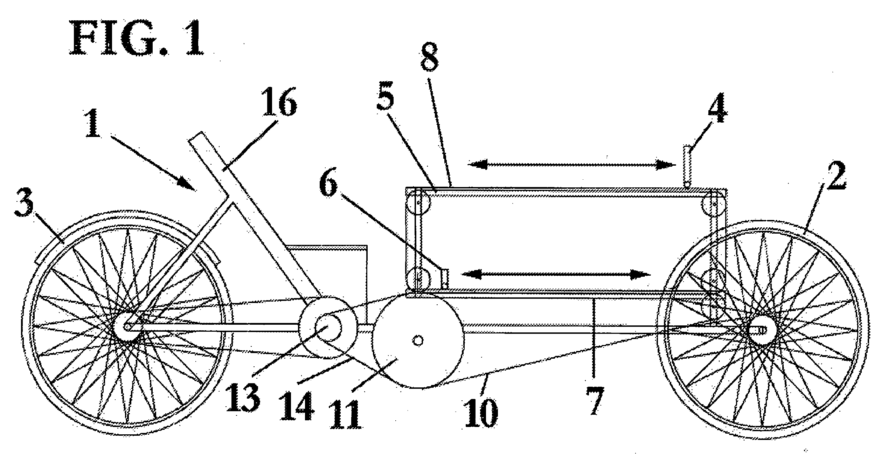

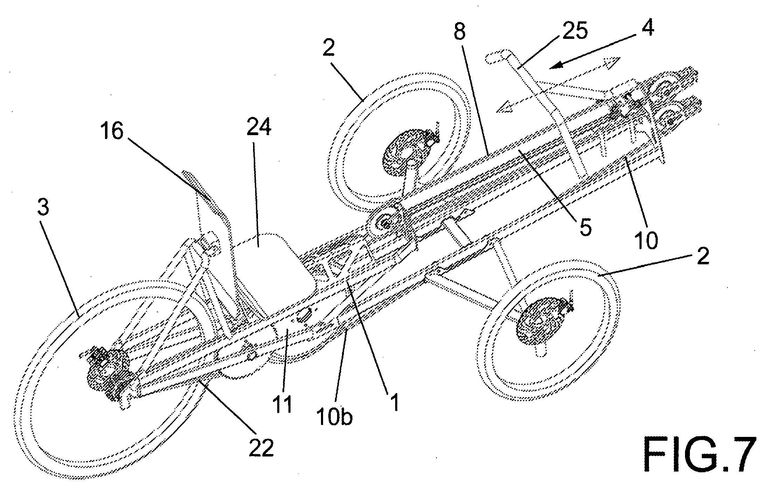

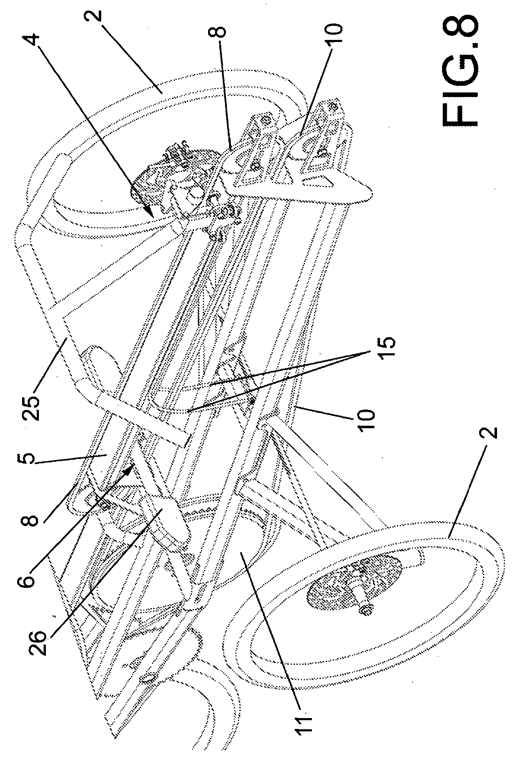

Following is a description of the present invention making reference to figures 1, 3, 7 and 8 which show a bicycle or tricycle that includes the system 18 of the present invention.

This bicycle or tricycle comprises a chassis 1 having a double front wheel 2 and a rear wheel 3, said rear wheel 3 being the driven wheel of the bicycle.

In order to drive the bicycle forward, both upper actuation means and lower actuation means are necessary.

The upper actuation means are actuated by the user's arms 19 and comprise the first drive element 4 that slides longitudinally along rails 5. The movement of the first drive element 4 is alternative, i.e. forwards and backwards.

The lower actuation means are actuated by the user's legs 20 and comprise the second drive element 6, which also slides longitudinally along rails 7. In this case, the movement of the second drive element 6 is also alternating, i.e. forwards and backwards.

It should be pointed out that the movement of the bicycle is the same as that of rowing, alternately moving the arms 19 and legs 20. In order to allow the user to move him / herself forward, the bicycle also comprises a backrest or support structure 16 for the user's back. Likewise, in order to actuate the drive elements 4, 6 with the user's arms 19 and legs 20, a seat 24 has been envisaged in the bicycle that is mounted in a longitudinally movable manner in relation to the chassis 1. Therefore, the distance between arms 19 and legs 20 is compensated in order to execute the travel path of the chain 8.

The first 4 and second 6 drive elements are fixed to the first endless chain 8 in opposing directions. As can be observed in figure 2, when the first drive element 4 is in its most forward position, the second drive element 6 is in its most backward position.

As can be observed in the figures, the drive element 4 that is linked to the user's arms 19 includes a steering wheel 25 for steering the front wheels 2 of the vehicle, while the drive element 6 that is linked to the legs 20 includes supports 26 that act as pedals. Also, in order to move the front wheels 2, the steering wheel 25 includes cables 15 of an appropriate length to enable the longitudinal movement of said steering wheel 25.

In the embodiment shown in figure 2, the first chain 8 is guided by four gearwheels, indicated by numerical reference 9.

As mentioned earlier, the drive mechanism of the bicycle of the present invention comprises a second chain 10. Said second chain 10 is linked to the first chain 8 by the second drive element 6, which is also attached to the second chain 10.

One of the ends of the second chain 10 is fixed to a first plate 11 that rotates integrally with the driven wheel 3 of the bicycle. The other end of the second chain 10 is fixed to a second plate 12 that rotates integrally with said first plate 11.

Also, said plate 11 is linked to a sprocket 13 by means of a third plate 17 and a third chain 14, as can be observed in figure 1.

Said third plate 17 rotates integrally with the first 11 and second 12 plates and is shown in figure 3.

When the user moves his/her arms and legs simultaneously, this causes the longitudinal movement of said first 4 and second 6 drive elements, which transforms into the rotary movement of said first chain 8. This rotary movement is transmitted to the second chain 10, as the two chains 8, 10 are attached by the second drive element 6 and, subsequently, to the driven wheel 3 of the bicycle by means of the plates 11, 12, 17, the sprocket 13 and the third chain 14.

As mentioned earlier, the drive mechanism of the bicycle of the present invention is very simple and also enables the bicycle to achieve much higher speeds than those known in the current state of the art.

With regard to controlling the steering of the bicycle, it is envisaged that said first drive element 4 is rotary with respect to a substantially horizontal axis and is attached to the double front wheel 2 of the bicycle by a pair of cables 15, in such a manner that said cables 15 transmit the rotation of the first drive element 4 to the double front wheel 2.

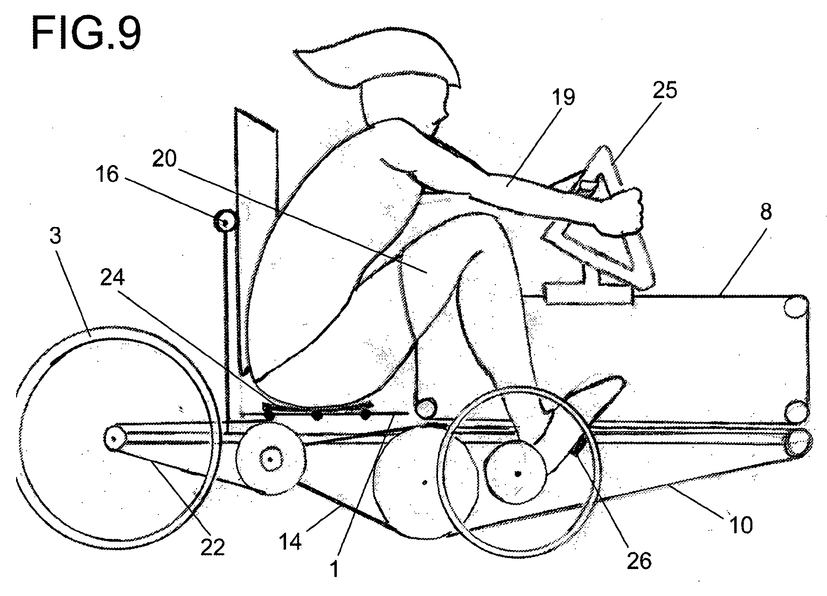

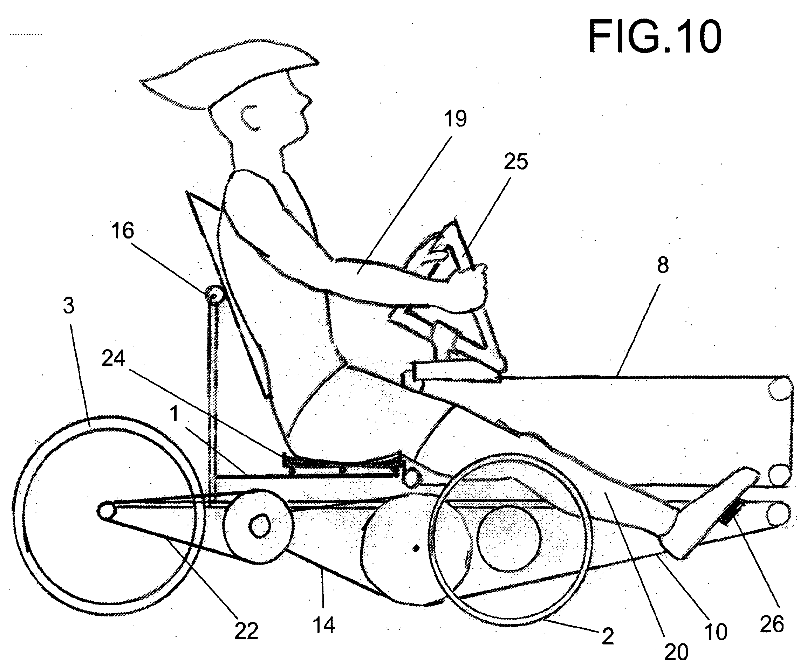

Figures 9 and 10 show two schematic drawings of a user mounted on a bicycle or tricycle which includes the actuation system 18 of the present invention. In these figures, the alternative movement similar to rowing made by the user with his / her arms 19 and legs 20 can be observed. The movement of the seat 24 throughout the chassis 1 to compensate the different distance of the arms 19 and legs 20 and the backrest or support structure 16 which allows the user to move forward can also be observed.

Although reference has been made to specific embodiments of the invention, it is evident for a person skilled in the art that the actuation system described is susceptible of numerous variations and modifications, and that all the aforementioned details can be substituted for other technically equivalent ones, without detracting from the scope of protection defined by the attached claims. Therefore, the system described can be applied to any type of human-powered vehicle in addition to a bicycle or tricycle, for example, a boat or airplane, and the person skilled in the art is susceptible of adapting the drive mechanism of the first endless chain in a manner other than that claimed in order to equally transmit the force exerted by the alternative movements of arms and legs through the same drive elements associated with said chain.

## Claims

1. System for actuating human-powered vehicles (18) comprising upper and lower actuation means that actuate the rotation of at least one of the wheels (3) of said vehicle, said upper actuation means being actuated by the user's arms (19) and said lower actuation means by the user's legs (20), said upper and lower actuation means being linked therebetween and being actuated by means of an alternative longitudinal movement, wherein said upper and lower actuation means are linked therebetween by means of a first endless chain (8) through a first drive element (4) movable longitudinally and a second drive element (6) movable longitudinally, one of said drive elements (4, 6) being susceptible of actuating said first chain (8) in one direction, while the other drive element (4, 6) moves simultaneously with the first chain (8) in the opposite direction and **characterized in that** said first chain (8) is integrally attached, by means of said second drive element (6), to a second transmission chain (10) linked to one of the wheels (3) of said vehicle.

2. System, according to claim 1, which comprises means for transmitting the movement of said first chain (8) to the wheel (3) of said vehicle in a single direction of rotation or forward movement of said vehicle, in such a manner that the movement of said first chain (8) in a direction of rotation opposite to that of forward travel is carried out without exerting traction force on said wheel (3).

3. System, according to claim 1, wherein said first (4) and second (6) drive elements are integrally attached to said first chain (8).

4. System, according to claim 1, wherein one of said drive elements (4) is linked to the arms (19) of a user by means of a steering wheel (25) for steering the wheels of said vehicle and the other drive element (6) is linked to the legs (20) of said user by means of supports (26) acting by way of pedals of said vehicle.

5. System, according to claim 4, wherein said vehicle is a bicycle or tricycle and said steering wheel (25) includes a pair of cables (15) for moving or steering the front wheels (2) of said bicycle or tricycle and changing the direction of travel.

6. System, according to claims 4 and 5, wherein said first drive element (4) linked to the wheel (25) is rotary with respect to a substantially horizontal axis and is attached to a double front wheel (2) of the bicycle by said pair of cables (15), in such a manner that said cables (15) transmit the rotation of the first drive element (4) to the double front wheel.

7. System, according to any of claims 1 to 6, wherein said second transmission chain (10) comprises a first end (10a) which is attached to a first plate (12) and a second end (10b) which is attached to a second plate (11), said second chain (10) being susceptible of actuating each of said plates (11, 12) alternatively.

8. System, according to claim 7, wherein said vehicle is a bicycle or tricycle and said movement transmission means include a third plate (17) that is actuated by the movement of said second chain (10), said third plate (17) being linked to a third transmission chain (14) which is associated with a sprocket or gearwheel (13) that rotates integrally with the plate (21) that actuates the wheel (3) of said bicycle or tricycle, said sprocket or gearwheel (13) being susceptible of transmitting the movement of said third chain (14) to the wheel of the bicycle or tricycle in a single direction of rotation or forward movement.

9. System, according to any of claims 7 to 8, wherein the diameter of the two plates (11, 12) is determined by the maximum stroke length of said two drive elements (4, 6), said stroke length being susceptible of being modified by the user him/herself to vary the speed of the vehicle.

10. Human-powered vehicle, **characterised in that** it includes the system (18) according to any of the preceding claims 1 to 9.

11. Vehicle, according to claim 10, comprising a seat (24) that is mounted in a longitudinally movable manner with respect to the chassis (1) of said vehicle, said seat (24) facilitating the actuation of said drive elements (4, 6) through the user's arms (19) and legs (20).

12. Vehicle, according to claim 11, wherein the chassis (1) of said vehicle comprises a support structure (16) that cooperates with said movable seat (24) to facilitate the actuation of said drive elements (4, 6).

13. Vehicle, according to any of claims 10 to 12, which consists of a bicycle or a tricycle.

## Patentansprüche

1. System zum Betätigen von durch menschliche Muskelkraft angetriebenen Fahrzeugen (18), das obere und untere Betätigungsmittel umfasst, welche die Rotation von mindestens einem der Räder (3) des Fahrzeugs bewirken, wobei das obere Betätigungsmittel durch die Arme des Nutzers (19) betätigt wird und das untere Betätigungsmittel durch die Beine des Nutzers (20) betätigt wird, wobei die oberen und unteren Betätigungsmittel miteinander verbunden sind und mittels einer alternativen Längsbewegung betätigt werden, wobei die oberen und unteren Betätigungsmittel mittels einer ersten Endloskette (8) durch ein erstes Antriebselement (4), das in Längsrichtung beweglich ist, und ein zweites Antriebselement (6), das in Längsrichtung beweglich ist, miteinander verbunden sind, wobei eines der Antriebselemente (4, 6) dafür eingerichtet ist, die erste Kette (8) in einer Richtung zu betätigen, während sich das andere Antriebselement (4, 6) gleichzeitig mit der ersten Kette (8) in der Gegenrichtung bewegt, und **dadurch gekennzeichnet, dass** die erste Kette (8) mittels des zweiten Antriebselements (6) einstückig an einer zweiten Transmissionskette (10) angebracht ist, die mit einem der Räder (3) des Fahrzeugs verbunden ist.

2. System nach Anspruch 1, das Mittel umfasst, um die Bewegung der ersten Kette (8) zu dem Rad (3) des Fahrzeugs in einer einzelnen Drehrichtung oder Vorwärtsbewegung des Fahrzeugs in einer solchen Weise zu übertragen, dass die Bewegung der ersten Kette (8) in einer Drehrichtung, die der Richtung der Vorwärtsfahrt entgegengesetzt ist, ausgeführt wird, ohne dass eine Antriebsskraft auf das Rad (3) ausgeübt wird.

3. System nach Anspruch 1, wobei das erste (4) und das zweite (6) Antriebselement einstückig an der ersten Kette (8) angebracht sind.

4. System nach Anspruch 1, wobei eines der Antriebselemente (4) mit den Armen (19) eines Nutzers mittels eines Lenkrades (25) zum Lenken der Räder des Fahrzeugs verbunden ist und das andere Antriebselement (6) mit den Beinen (20) des Nutzers mittels Stützen (26) verbunden ist, die als Pedale des Fahrzeugs wirken.

5. System nach Anspruch 4, wobei das Fahrzeug ein Zweirad oder ein Dreirad ist und das Lenkrad (25) ein Paar Seile (15) zum Bewegen oder Lenken der Vorderräder (2) des Zweirades oder Dreirades und zum Ändern der Fahrtrichtung umfasst.

6. System nach den Ansprüchen 4 und 5, wobei das erste Antriebselement (4), das mit dem Rad (25) verbunden ist, mit Bezug auf eine im Wesentlichen horizontale Achse drehbar ist und an einem doppelten Vorderrad (2) des Zweirades durch das Paar Seile (15) in einer solchen Weise angebracht ist, dass die Seile (15) die Rotation des ersten Antriebselements (4) zu dem doppelten Vorderrad übertragen.

7. System nach einem der Ansprüche 1 bis 6, wobei die zweite Transmissionskette (10) ein erstes Ende (10a) umfasst, das an einer ersten Platte (12) angebracht ist, und ein zweites Ende (10b) umfasst, das an einer zweiten Platte (11) angebracht ist, wobei die zweite Kette (10) dafür eingerichtet ist, jede der Platten (11, 12) alternativ zu betätigen.

8. System nach Anspruch 7, wobei das Fahrzeug ein Zweirad oder ein Dreirad ist und das Bewegungstransmissionsmittel eine dritte Platte (17) umfasst, die durch die Bewegung der zweiten Kette (10) betätigt wird, wobei die dritte Platte (17) mit einer dritten Transmissionskette (14) verbunden ist, die einem Ketten- oder Zahnrad (13) zugeordnet ist, das sich einstückig mit der Platte (21) dreht, die das Rad (3) des Zweirades oder Dreirades betätigt, wobei das Ketten- oder Zahnrad (13) dafür eingerichtet ist, die Bewegung der dritten Kette (14) zu dem Rad des Zweirades oder Dreirades in einer einzelnen Drehrichtung oder Vorwärtsbewegung zu übertragen.

9. System nach einem der Ansprüche 7 und 8, wobei der Durchmesser der zwei Platten (11, 12) durch die maximale Hublänge der zwei Antriebselemente (4, 6) bestimmt wird, wobei die Hublänge durch den Nutzer selbst verändert werden kann, um die Geschwindigkeit des Fahrzeugs zu ändern.

10. Durch menschliche Muskelkraft angetriebenes Fahrzeug, **dadurch gekennzeichnet, dass** es das System (18) nach einem der vorangehenden Ansprüche 1 bis 9 umfasst.

11. Fahrzeug nach Anspruch 10, das einen Sitz (24) umfasst, der in einer mit Bezug auf das Fahrgestell (1) des Fahrzeugs in Längsrichtung beweglichen Weise montiert ist, wobei der Sitz (24) die Betätigung der Antriebselemente (4, 6) durch die Arme (19) und Beine (20) des Nutzers unterstützt.

12. Fahrzeug nach Anspruch 11, wobei das Fahrgestell (1) des Fahrzeugs eine Stützstruktur (16) umfasst, die mit dem beweglichen Sitz (24) zusammenwirkt, um die Betätigung der Antriebselemente (4, 6) zu unterstützen.

13. Fahrzeug nach einem der Ansprüche 10 bis 12, das aus einem Zweirad oder einem Dreirad besteht.

## Revendications

1. Système permettant d'actionner des véhicules à propulsion humaine (18) comprenant des moyens d'actionnement supérieur et inférieur qui actionnent la rotation d'au moins l'une des roues (3) dudit véhicule, ledit moyen d'actionnement supérieur étant actionné par les bras (19) de l'utilisateur et ledit moyen d'actionnement inférieur étant actionné par les jambes (20) de l'utilisateur, lesdits moyens d'actionnement supérieur et inférieur étant reliés entre eux et étant actionnés au moyen d'un mouvement longitudinal alternatif, dans lequel lesdits moyens d'actionnement supérieur et inférieur sont raccordés entre eux par une première chaîne sans fin (8) par le biais d'un premier élément d'entraînement (4) mobile dans le sens longitudinal et d'un deuxième élément d'entraînement (6) mobile dans le sens longitudinal, l'un desdits éléments d'entraînement (4, 6) étant susceptible d'actionner ladite première chaîne (8) dans un sens, tandis que l'autre élément d'entraînement (4, 6) se déplace simultanément avec la première chaîne (8) dans le sens opposé, et **caractérisé en ce que** ladite première chaîne (8) est fixée, au moyen dudit deuxième élément d'entraînement (6), à une deuxième chaîne de transmission (10) raccordée à l'une des roues (3) dudit véhicule.

2. Système selon la revendication 1, comprenant des moyens pour transmettre le mouvement de ladite première chaîne (8) à la roue (3) dudit véhicule dans un seul sens de rotation ou un mouvement avant dudit véhicule, de sorte que le mouvement de ladite première chaîne (8) dans un sens de rotation opposé à celui de la marche avant est exercé sans exercer de force de traction sur ladite roue (3).

3. Système selon la revendication 1, dans lequel ledit premier (4) et ledit deuxième (6) éléments d'entraînement sont fixés à ladite première chaîne (8).

4. Système selon la revendication 1, dans lequel l'un desdits éléments d'entraînement (4) est raccordé aux bras (19) d'un utilisateur par le biais d'un volant (25) pour diriger les roues dudit véhicule, et l'autre élément d'entraînement (6) est raccordé aux jambes (20) dudit utilisateur par le biais de supports (26) agissant par l'intermédiaire de pédales dudit véhicule.

5. Système selon la revendication 4 dans lequel ledit véhicule est un vélo ou un tricycle et ledit volant (25) comprend une paire de câbles (15) pour déplacer ou diriger les roues avant (2) dudit vélo ou tricycle et modifier la direction.

6. Système selon les revendications 4 et 5, dans lequel ledit premier élément d'entraînement (4) raccordé à au volant (25) tourne par rapport à un axe essentiellement horizontal et est fixé à une roue avant double (2) du vélo par ladite paire de câbles (15) de sorte que lesdits câbles (15) transmettent la rotation dudit premier élément d'entraînement (4) à la roue avant double.

7. Système selon l'une des revendications 1 à 6, dans lequel ladite deuxième chaîne de transmission (10) comprend une première extrémité (10a) qui est raccordée à une première plaque (12) et une deuxième extrémité (10b) qui est raccordée à une deuxième plaque (11), ladite deuxième chaîne (10) étant susceptible d'actionner chacune desdites plaques (11, 12) alternativement.

8. Système selon la revendication 7, dans lequel ledit véhicule est un vélo ou un tricycle et lesdits moyens de transmission du mouvement comprennent une troisième plaque (17) qui est actionnée par le mouvement de ladite deuxième chaîne (10), ladite troisième plaque (17) étant raccordée à une troisième chaîne de transmission (14) qui est associée à un pignon ou à une roue dentée (13) qui tourne avec la plaque (21) qui actionne la roue (3) dudit vélo ou dudit tricycle, ledit pignon ou ladite roue dentée (13) étant susceptible de transmettre le mouvement de ladite troisième chaîne (14) à la roue du vélo ou du tricycle dans un seul sens de rotation ou dans un mouvement avant.

9. Système selon l'une des revendications 7 à 8, dans lequel le diamètre des deux plaques (11, 12) est déterminé par la longueur de course maximale desdits deux éléments d'entraînement (4, 6), ladite longueur de course étant susceptible d'être modifiée par l'utilisateur lui-même pour modifier la vitesse du véhicule.

10. Véhicule à propulsion humaine, **caractérisé en ce qu'**il comprend le système (18) selon l'une des revendications précédentes 1 à 9.

11. Véhicule selon la revendication 10 comprenant un siège (24) qui est monté de façon mobile dans le sens longitudinal par rapport au châssis (1) dudit véhicule, ledit siège (24) facilitant l'actionnement desdits éléments d'entraînement (4, 6) par le biais des bras (19) et des jambes (20) de l'utilisateur.

12. Véhicule selon la revendication 11, dans lequel le châssis (1) dudit véhicule comprend une structure de support (16) qui coopère avec ledit siège mobile (24) pour faciliter l'actionnement desdits éléments d'entraînement (4, 6).

13. Véhicule selon l'une des revendications 10 à 12, qui consiste en un vélo ou un tricycle.
